(19) **Europäisches Patentamt / European Patent Office / Office européen des brevets**

(11) **EP 1 355 951 B1**

(12) # EUROPÄISCHE PATENTSCHRIFT

(45) Veröffentlichungstag und Bekanntmachung des Hinweises auf die Patenterteilung:
**31.07.2013 Patentblatt 2013/31**

(21) Anmeldenummer: **01991647.7**

(22) Anmeldetag: **11.12.2001**

(51) Int Cl.:
***C08B 30/12*** *(2006.01)*     ***C08L 3/02*** *(2006.01)*

(86) Internationale Anmeldenummer:
**PCT/DE2001/004680**

(87) Internationale Veröffentlichungsnummer:
**WO 2002/048198 (20.06.2002 Gazette 2002/25)**

(54) **WASSERFORMBESTÄNDIGES, THERMOPLASTISCHES STÄRKEMATERIAL UND VERFAHREN ZU DESSEN HERSTELLUNG**

DIMENSIONALLY WATER-RESISTANT THERMOPLASTIC STARCH MATERIAL, AND METHOD FOR PRODUCING THE SAME

MATERIAU A BASE D'AMIDON THERMOPLASTIQUE ET RESISTANT A LA DEFORMATION DANS L'EAU ET SON PROCEDE DE PRODUCTION

(84) Benannte Vertragsstaaten:
**AT BE CH CY DE DK ES FI FR GB GR IE IT LI LU MC NL PT SE TR**

(30) Priorität: **11.12.2000 DE 10062848**

(43) Veröffentlichungstag der Anmeldung:
**29.10.2003 Patentblatt 2003/44**

(60) Teilanmeldung:
**10185242.4 / 2 380 915**

(73) Patentinhaber: **BIOP Biopolymer Technologies AG**
**01217 Dresden (DE)**

(72) Erfinder:
 • **BERGER, Werner**
  **01217 Dresden (DE)**
 • **JEROMIN, Lutz**
  **40723 Hilden (DE)**
 • **MONDSCHEIN, Anke**
  **01445 Radebeul (DE)**
 • **OPITZ, Guntram**
  **01279 Dresden (DE)**

(74) Vertreter: **Uhlemann, Henry**
**Kailuweit & Uhlemann**
**Patentanwälte**
**Postfach 320 139**
**01013 Dresden (DE)**

(56) Entgegenhaltungen:
**EP-A2- 0 551 954    EP-A2- 0 757 070**

WO-A-90/10019    WO-A1-90/05161
WO-A1-92/18325    DE-C- 4 317 696
GB-A- 1 075 001    US-A- 5 667 885

• FUNKE U ET AL: "Processing and characterization of biodegradable products based on starch" POLYMER DEGRADATION AND STABILITY, BARKING, GB, Bd. 59, Nr. 1-3, Januar 1998 (1998-01), Seiten 293-296, XP004294390 ISSN: 0141-3910
• HULLEMAN S H D ET AL: "The role of water during plasticization of native starches" POLYMER, ELSEVIER SCIENCE PUBLISHERS B.V, GB, Bd. 39, Nr. 10, 1. Mai 1998 (1998-05-01), Seiten 2043-2048, XP004108252 ISSN: 0032-3861
• VAN SOEST J J G ET AL: "Changes in the mechanical properties of thermoplastic potato starch in relation with changes in B-type crystallinity", CARBOHYDRATE POLYMERS, APPLIED SCIENCE PUBLISHERS, LTD. BARKING, GB, vol. 29, no. 3, 1 March 1996 (1996-03-01), pages 225-232, XP004069608, ISSN: 0144-8617, DOI: 10.1016/0144-8617(96)00011-2
• FARHAT I A ET AL: "The retrogradation of waxy maize starch extrudates: Effects of storage temperature and water content", BIOPOLYMERS CONF - 22ND AMERICAN PEPTIDE SYMPOSIUM; SAN DIEGO, CA, USA; JUNE 25 -30, 2011, WILEY INTERSCIENCE, vol. 53, no. 5, 15 April 2000 (2000-04-15) , pages 411-422, XP002658863, ISSN: 0006-3525, DOI: DOI:10.1002/(SICI) 1097-0282(20000415)53:5< 411::AID-BIP5>3.0.CO;2-M [retrieved on 2000-03-28]

EP 1 355 951 B1

**Beschreibung**

Die Erfindung betrifft ein wasserformbeständiges, thermoplastisches Stärkematerial auf Basis nativer Stärke sowie ein Verfahren zu dessen Herstellung. Aus den erfindungsgemäßen Stärkematerialien lassen sich in Abhängigkeit von der Produktzusammensetzung auf konventionellen Thermoplast-Verarbeitungsmaschinen Spritzguß-, Tiefzieh- und Blasformteile sowie Folien herstellen.

In den letzten Jahren sind zahlreiche Verfahren zur Herstellung und Verformung von thermoplastischer Stärke (TPS) allein oder in einer Polymermischung bzw. Polymerschmelze oder Polymerblend bekannt geworden. Diese Arbeiten wurden mit dem Ziel ausgeführt, neue bzw. erweiterte Einsatzfelder für nachwachsende Rohstoffe zu erschließen.

Es ist bekannt, die körnige Struktur nativer Stärke zuerst mit definierten Anteilen an Destrukturierungsmitteln (10-30 Gew.%) Wasser oder/und niederen polyfunktionellen Alkoholen, wie Ethylenglykol, Propylenglykol, Glycerol, 1,3-Butandiol, Diglycerid, entsprechende Ether, aber auch Verbindungen wie Dimethylsulfoxid, Dimethylformamid, Dimethylharnstoff, Dimethylacetamid und/oder anderen Zusatzstoffen thermomechanisch zu thermoplastischem Material mit Hilfe von konventionellen Doppelwellenextrudern im Temperaturbereich von 120-190 °C aufzuschließen.

Dieser Prozess wird in der Literatur (R. L. Shogren et al: Starch/ Stärke 45 [1993] 276 . 280) als Stärkedestrukturierung bezeichnet und ist durch den Verlust der Ordnung und Kristallinität der nativen Stärke charakterisiert. Das so hergestellte reine thermoplastisch verformbare Material hat sich aber als eigenständiger Konstruktionswerkstoff wegen seiner begrenzten Verarbeitbarkeit, seiner ungenügenden Wasserformbeständigkeit und seinen klimabedingten Veränderungen bisher als technisch unbrauchbar erwiesen.

Zur Verbesserung der Verarbeitbarkeit und Wasserformbeständigkeit befassen sich zahlreiche Vorschläge mit der Zumischung synthetisch gewonnener wasserfester Polymere, wie z. B. Polyethylen, Polypropylen oder aliphatische (Co-) Polyester, aliphatischaromatische Copolyester, Polyesteramide, Polyesterurethane und/oder Mischungen als Mischungskomponente für Stärke. Dabei tritt aber das Problem auf, daß die Verträglichkeit zwischen den Polymerkomponenten ungenügend ist und die biologische Abbaubarkeit bzw. auch die Kostenstruktur ungünstig werden.

Weitere Vorschläge beinhalten die Derivatisierung der Stärke, wie z. B. Stärkeacetat zur Herstellung eines thermoplastischen Kunststoffes (DE 19633474, EP 0603837, DE 19515477, DE 19805367, US 5,367,067). In Abhängigkeit vom Substitutionsgrad sind Plastifikatoren erforderlich bzw. die biologische Abbaubarkeit ist nicht mehr gegeben.

Der Stand der Technik ist umfassend im Schrifttum dokumentiert. Als Bezug sei auf die Publikation von R.F.T. Stepto et al. "Injection Moulding of Natural Hydrophilic Polymers in the Presence of Water" Chimia 41 (1987) Nr. 3, S. 76-81 und die dort zitierte Literatur sowie beispielhaft auf die Patente DE 4116404, EP 0327505, DE 4038732, US 5106890, US 5439953, DE 4117628, WO 94/04600, DE 4209095, DE 4122212, EP 0404723 oder EP 407350 hingewiesen.

In zahlreichen Patentanwendungen, wie z.B. DE 40 32 732, DE 195 33 800, DE 19 75 0846 werden Mischungen aus TPS mit einem wasserfesten Polymeren sowie die Herstellung einer Komponente, die als Verträglichkeitsvermittler wirkt beschrieben. Patentanmeldung DE 1993867.2 beinhaltet ein Verfahren zur Herstellung einer thermoplastischen Stärkemischung durch reaktive Extrusion einer Mischung von nativer Stärke in Gegenwart eines aciden Katalysators und wenigstens einem hydrophoben Polymer unter Zusatz einer hydrolysierten Komponente auf Polyvinylacetat-Basis und von niederen polyfunktionellen Alkoholen oder/ und Wasser, das zu einer wesentlichen Verbesserung von Produkteigenschaften und zur Erhöhung der Prozeßstabilität führt.

Wasserformbeständige Werkstoffe aus reiner Stärke mit niedermolekularen Hilfsstoffen waren bisher nicht herstellbar. Wirtschaftlich relevante Stärkeprodukte erforderten die chemische Derivatisierung der Stärke oder die Zumischung synthetischer Polymermaterialien. Die Zumischung synthetischer Polymermaterialien bedurfte zudem einer Verträglichkeitsvermittlung, wobei der Stärkeanteil im Gesamtprodukt einen definierten Anteil nicht überschreitet.

WO90/10019 betrifft ein Verfahren zur Herstellung von homogenisierter teilweise rekristalierter Stärke, wobei zunächst die helicale Struktur der Stärke durch die Erhitzung auf Temperaturen von 177°C bis 190°C zerstört wird.

EP0757070 A2 beschreibt ein Verfahren zur Nachbehandlung von Spritzgussartikeln aus Stärkeprodukten mit einer wässrigen Lösung von Ammoniumsulfat oder Magnesiumsulfat oder mit einer Mischung von Wasser und einem wassermischbaren Lösungsmittel.

Ausgehend von den ökologischen Zielen, nachwachsende Rohstoffe noch stärker zu nutzen und umweltverträgliche Produkte wirtschaftlich herzustellen, ist es deshalb Aufgabe der Erfindung, ein wasserformbeständiges thermoplastisches Stärkematerial auf Basis nativer Stärke zu schaffen.

Überraschend wurde gefunden, daß ein wasserformbeständiges, thermoplastisches Stärkematerial durch Extrusion nativer Stärke mit Wasser als Destrukturierungsmittel mit einem Anteil von 30 bis 60 Gew% bezogen auf die Einsatzmenge der nativen Stärke in einem Doppelwellenextruder im Temperaturbereich von 70 - 105 °C und einer anschließenden Lagerung zur Retrogradation zur Ausbildung von wasserbeständigen Überstrukturen erhältlich ist.

Die nativen Stärken basieren auf Knollenstärke , wie Kartoffelstärke .

Erfindungsgemäß wird das wasserformbeständige thermoplastische Stärkematerial so hergestellt, dass native Knollenstärke mit Wasser als Destrukturierungsmittel mit einem Anteil von 30 bis 60 Gew% bezogen auf die Einsatzmenge und unter Berücksichtigung des Feuchtegehaltes der nativen Stärke in einem Doppelschneckenextruder bei einer Zylindertemperatur von 70 - 105 °C, vorzugsweise von 75 - 105 °C und einem spezifisch mechanischen Eintrag (SME) von 200 -1500, vorzugsweise 300-1000 kJ/kg zu einem Strang extrudiert und nach dessen Granulierung zur Retrogradation bei hohen Luftfeuchten > 80% und Lagerzeiten von 1 bis 24 h dicht verschlossen bis zur Weiterverarbeitung gelagert wird. Die Extrusion erfolgt dabei vorteilhaft bei einer Verweilzeit von mindestens 2 min.

Zur Retrogradation, zur Ausbildung von wasserbeständigen Überstrukturen wird das extrudierte und granulierte Stärkematerial bei hohen Luftfeuchten > 80% und Lagerzeiten von 1 bis 24h, vorzugsweise 5 -10 h gelagert.

Als Destrukturierungsmittel werden Wasser und ggf. zusätzlich niedere polyfunktionelle Alkohole ausgewählt aus Ethylenglykol, Propylenglykol, Glycerol, 1,3-Butandiol, Diglycerid, entsprechenden Ethern, und/oder Verbindungen ausgewählt aus Dimethylsulfoxid, Dimethylformamid, Dimethylharnstoff und Dimethylacetamid eingesetzt. Bei Verwendung von Wasser als Destrukturierungsmittel wird der Wassergehalt der natürlichen Stärke bei der Berechnung des Anteiles an Destrukurierungsmittel berücksichtigt.

Als Destrukturierungsmittel eingesetztes Wasser und Glycerin reduziert in Abhängigkeit von der Konzentration die Glasübergangstemperatur der Stärke und beeinflussen die Reorganisation der Stärkebestandteile Amylose und Amylopektin.

Während des Quellprozesses im Temperaturbereich von 70 - 105 °C und z. B. 50 Gew. % Wasser bezogen auf die Einsatzmenge quillt das Stärkekorn und bildet ein verformbares Gel bestehend aus einem dreidimensionalen Netzwerk von Amylose und Amylopektin. Während des Quellvorganges diffundiert die lineare Amylose aus dem granulären Stärkekorn heraus, wird partiell angelöst und bildet an der Phasengrenze zum Amylopektin eine neue morphologische Struktureinheit. Während der Lagerung retrogradiert das Material und erreicht einen Zustand höherer Organisation, der wasserformbeständig ist.

Anhand nachfolgender Ausführungsbeispiele wird die Erfindung näher erläutert:

In einem Schnellmischer wurden

- 99,5 g native Kartoffelstärke mit einem Wassergehalt von 18 % (Superior, Emsland-Stärke GmbH)

- 0,5 g gefällte Kieselsäure (Tixosil 38AB, Rhodia GmbH)

zu einem gut rieselnden Pulver vermischt.

Die Pulvermischung und die flüssig dosierte Mischung aus 19,1 g Glycerin und 80,9 g Wasser wurden im Masseverhältnis von 63,3 : 36,7 mit einem gleichlaufenden Doppelschneckenextruder (ZE 25, Fa. Berstorff, L = 32xD) bei einer Zylindertemperatur von 90 °C, einer Schneckendrehzahl von 100 min$^{-1}$ und einem Massedurchsatz von 2,4 kg/h zu einem kompakten Strang extrudiert. Nach der Granulierung wurde das Material dicht verschlossen gelagert, um eine Veränderung des Wassergehaltes zu verhindern.

Das Granulat wurde mit dem oben beschriebenen Extruder, ausgerüstet mit einer Breitschlitzdüse nach > 24 h bei einer Zylindertemperatur von 90-110 °C reextrudiert und zu einer Flachfolie verformt.

Das so hergestellte Stärkematerial sowie in gleicher Weise hergestellte Stärkematerialien entsprechend der in Tabellen 1 bis 3 aufgeführten Rezepturen und daraus hergestellte Flachfolien wurden untersucht und bewertet.

**Bestimmung der Löslichkeit/Quellbarkeit**

Strangproben (Länge 30 mm, ⌀ 3 mm) werden 24 h in Wasser bei Raumtemperatur gelagert. Nach Abtupfen des oberflächlich anhaftenden Wassers wird die Massezunahme der Probe ermittelt und unter Berücksichtigung der Trockenmasse der Probe die Quellbarkeit berechnet. Die gequollenen Probe werden anschließend 12 h bei 120 °C bis zur Gewichtskonstanz getrocknet. Aus dieser Masse wird der im Wasser gelöste Anteil der ursprünglichen Probe bestimmt.

**Bestimmung der Wasserbeständigkeit der Flachfolien**

Probestücke der Flachfolien (Länge = 100 mm, Breite 30 mm) werden 24 h im Wasser bei Raumtemperatur gelagert und ihr Zustand visuell eingeschätzt. Die wasserbeständigen Folien sind etwas gequollen, zeigen jedoch noch ihre ursprüngliche Form, weisen eine gewisse mechanische Festigkeit auf. Wasserunbeständige Proben quellen stark, zerfallen bei der Lagerung im Wasser und weisen keinerlei mechanische Festigkeit auf.

Folgende Bewertungskriterien sind in den Tabellen 1 bis 3 aufgeführt:

++ = Folienprobe nahezu unverändert

+ = Quellung der Folie unter Erhalt mechanischer Stabilität

- = Quellung und Zerfall der Folie (Probe kann z. B. nicht unzerstört aus dem Wasser entnommen werden)

**SME = Spezifischer mechanischer Energieeintrag**

Der spezifische mechanische Energieeintrag in das Extrusionsgut während der Extrusion kann bei gemessenem Drehmoment (Summe der Drehmomente beider Schnecken) nach folgender Gleichung abgeschätzt werden.

$$SME = (2\pi * M * n) / m$$

SME ... Spezifischer mechanischer Energieeintrag

M ... Drehmoment in Nm

n ... Schneckendrehzahl in min$^{-1}$

m ... Durchsatz in kg/h

Tabellen 1 und 2 beinhalten Ergebniswerte von Stärkematerial auf Basis Kartoffelstärke mit unterschiedlichen Anteilen an Stärke und Destrukturierungsmittel.

Tabelle 1: Wasserbeständigkeit, Löslichkeit und Quellbarkeit von thermoplastischer Stärke, hergestellt aus Kartoffelstärke, Wasser und Glycerin - Variation der Anteile an Glycerin und Wasser Extrusionstemperatur = 90 °C, Durchsatz 2,4 kg/h

| Nr. | Kartoffelstärke (absolut) [%] | H$_2$O [%] | Glycerin [%] | Tixosil [%] | SME [kJ/kg] | Löslichkeit [%] | Quellbarkeit [%] | Wasser- beständigkeit |
|---|---|---|---|---|---|---|---|---|
| 1 | 44,5 | 55 | 0 | 0,5 | 314 | 1,0 | 6 | ++ |
| 2 | 49,5 | 50 | 0 | 0,5 | 471 | 1,6 | 12 | ++ |
| 3 | 51,7 | 48 | 0 | 0,3 | 550 | 1,7 | 13 | ++ |
| 4 | 54,5 | 45 | 0 | 0,5 | 785 | 0 | 18 | ++ |
| 5 | 59,5 | 40 | 0 | 0,5 | 989 | 0 | 20 | ++ |
| 6 | 49,5 | 45 | 5 | 0,5 | 518 | 4,4 | 16 | ++ |
| 7 | 59,5 | 35 | 5 | 0,5 | 1146 | 3,3 | 24 | + |
| 8 | 51,7 | 41 | 7 | 0,3 | 393 | 5,1 | 22 | ++ |
| 9 | 49,5 | 40 | 10 | 0,5 | 628 | 8,0 | 16 | ++ |
| 10 | 59,5 | 30 | 10 | 0,5 | 1335 | 12,7 | 28 | + |

Tabelle 2: Wasserbeständigkeit, Löslichkeit und Quellbarkeit von thermoplastischer Stärke, hergestellt aus Kartoffelstärke, Wasser und Glycerin - Variation der Verfahrensparameter (Temperatur, Schneckendrehzahl) Rezeptur: 51,7 % Kartoffelstärke (absolut) / 41 % Wasser / 7 % Glycerin / 0,3 % Tixosil 38AB

| Nr. | Extrusions- temperatur [°C] | SME [kJ/kg] | Löslichkeit [%] | Quellbarkeit [%] | Wasser- beständigkeit |
|---|---|---|---|---|---|
| 11** | 60 | 2199 | 12,4 | 107 | - |
| 12 | 70 | 942 | 9,8 | 21 | ++ |
| 13** | 70 | 1885 | 13,5 | 95 | - |
| 14 | 90 | 251 | 11,2 | 30 | ++ |
| 15 | 90 | 393 | 5,1 | 22 | ++ |

(fortgesetzt)

| Nr. | Extrusions-temperatur [°C] | SME [kJ/kg] | Löslichkeit [%] | Quellbarkeit [%] | Wasser-beständigkeit |
|---|---|---|---|---|---|
| 16 | 90 | 707 | 11,6 | 26 | ++ |
| 17 | 90 | 1005 | 8,0 | 22 | ++ |
| 18 | 100 | Extruder fest, infolge Drehmoment > 200 Nm | | | |
| 19*)** | 110 | 3416 | 23,3 | 140 | - |
| *) doppelte Menge Glycerin enthaltend<br>**) nicht erfindungsgemäß | | | | | |

Tabelle 3 beinhaltet Ergebniswerte von Stärkematerialien auf Basis unterschiedlicher Stärkearten.

Tabelle 3: Wasserbeständigkeit, Löslichkeit und Quellbarkeit von thermoplastischer Stärke, hergestellt aus Stärke, Wasser und Glycerin - Variation der Stärkeart, Wirkung von Verarbeitungshilfsmitteln Rezeptur: 51,7 % Stärke (absolut) / 41 % Wasser /7 % Glycerin / 0,3 % Tixosil 38AB Extrusionstemperatur = 90 °C

| Nr. | Stärkeart | Additive | SME [kJ/kg] | Löslichkeit [%] | Quellbarkeit [%] | Wasserbeständigkeit |
|---|---|---|---|---|---|---|
| 20 | Kartoffel | --- | 393 | 5,1 | 22 | ++ |
| 21 | Kartoffel | 1 % Stearinsäure + 1 % Glycerinmonostearat | 550 | 7,7 | 10 | ++ |
| 22 | 90 % Kartoffelstärke + 10 % Amylose | --- | 628 | 8,6 | 22 | + |
| 23 | Weizen * | --- | 628 | 6,4 | 24 | + |
| 24 | Weizen * +10 % Amylose | --- | 314 | 8,7 | 21 | + |
| 25 | Amylose | --- | 707 | 10,2 | 13 | ++ |
| *) nicht erfindungsgemäß | | | | | | |

**Patentansprüche**

**1.** Verfahren zur Herstellung eines wasserformbeständigen, thermoplastischen Stärkematerials **dadurch gekennzeichnet, dass** native Stärke mit Wasser als Destrukturierungsmittel mit einem Anteil von 30 - 60 Gew% bezogen auf die Einsatzmenge und unter Berücksichtigung des Feuchtegehaltes der nativen Stärke in einem Doppelschneckenextruder bei einer Zylindertemperatur von 70 - 105 °C und einem spezifisch mechanischen Eintrag (SME) von 200 - 1500 zu einem Strang extrudiert, granuliert und anschließend zur Retrogradation bei hohen Luftfeuchten > 80% und Lagerzeiten von 1 bis 24 h gelagert wird, wobei als native Stärke Knollenstärke eingesetzt wird.

**2.** Verfahren nach Anspruch 1, **dadurch gekennzeichnet, dass** die Extrusion bei einer Verweilzeit von mindestens 2 min erfolgt.

**3.** Verfahren nach Anspruch 1 oder 2, **dadurch gekennzeichnet, dass** als Destrukturierungsmittel zusätzlich niedere polyfunktionelle Alkohole, ausgewählt aus Ethylenglykol, Propylenglykol, Glycerol, 1,3-Butandiol und Diglycerid, entsprechende Ether, und/oder Verbindungen ausgewählt aus Dimethylsulfoxid, Dimethylformamid, Dimethylharnstoff und Dimethylacetamid, eingesetzt werden.

**Claims**

1. Method for producing a dimensionally water-resistant thermoplastic starch material, **characterized in that** native starch is extruded to a strand, using water as a destructuring agent with a content of 30-60% by weight relative to the quantity used, and taking in account the moisture content of the native starch, in a twin-screw extruder, at a barrel temperature of 70-105°C and at a specific mechanical energy (SME) input ranging from 200-1500, then granulated and afterwards stored for retrogradation at high air humidity >80% and storage times ranging from 1 to 24 h , whereby root starch is used as native starch.

2. Method according to claim 1, **characterized in that** the extrusion takes place at a residence time time of at least 2 minutes.

3. Method according to claim 1 or 2, **characterized in that** as destructuring agents, moreover lower polyfunctional alcohols are used, chosen from ethylene glycol, propylene glycol, glycerol, 1,3-butanediol and diglyceride, corresponding ethers, and/or compounds chosen from dimethyl sulphoxide, dimethyl formamide, dimethyl carbamide, and dimethyl acetamide.

**Revendications**

1. Procédé de fabrication d'un matériau à base d'amidon thermoplastique et résistant à la déformation dans l'eau, **caractérisé en ce que** de l'amidon natif avec de l'eau comme agent déstructurant, dans une proportion de 30 à 60 % en poids par rapport à la quantité utilisée et en tenant compte de la teneur en humidité de l'amidon natif, est extrudé en un boudin dans une extrudeuse à double vis à une température de cylindre de 70 à 105 °C et une énergie mécanique spécifique (EMS) de 200 à 1500, transformé en granulés et ensuite stocké pour rétrogradation à des humidités de l'air élevées > 80 % et pendant un temps de stockage de 1 à 24 h, de l'amidon de tubercules étant utilisé comme amidon natif.

2. Procédé selon la revendication 1, **caractérisé en ce que** l'extrusion s'effectue avec un temps de séjour d'au moins 2 min.

3. Procédé selon la revendication 1, **caractérisé en ce que** l'on utilise en plus comme agent déstructurant des alcools polyfonctionnels inférieurs sélectionnés parmi éthylène glycol, propylène glycol, glycérol, 1,3-butanediol et diglycéride, des éthers correspondants et/ou des composés sélectionnés parmi diméthylsulfoxyde, diméthylformamide, diméthylurée et diméthylacétamide.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19633474
- EP 0603837 A
- DE 19515477
- DE 19805367
- US 5367067 A
- DE 4116404
- EP 0327505 A
- DE 4038732
- US 5106890 A
- US 5439953 A
- DE 4117628
- WO 9404600 A
- DE 4209095
- DE 4122212
- EP 0404723 A
- EP 407350 A
- DE 4032732
- DE 19533800
- DE 19750846
- DE 1993867
- WO 9010019 A
- EP 0757070 A2

**In der Beschreibung aufgeführte Nicht-Patentliteratur**

- **R. L. SHOGREN et al.** *Starch/ Stärke,* 1993, vol. 45, 276
- **R.F.T. STEPTO et al.** Injection Moulding of Natural Hydrophilic Polymers in the Presence of Water. *Chimia,* 1987, vol. 41 (3), 76-81